## Europäisches Patentamt
## European Patent Office
## Office européen des brevets

(19)

(11) Veröffentlichungsnummer: **0 144 590**
**B1**

(12) # EUROPÄISCHE PATENTSCHRIFT

(45) Veröffentlichungstag der Patentschrift:
15.10.86

(51) Int. Cl.⁴: **F 16 C 11/06**

(21) Anmeldenummer: **84111676.7**

(22) Anmeldetag: **29.09.84**

(54) **Befestigung eines Dichtungsbalges am Gelenkgehäuse eines Kugelgelenkes.**

(30) Priorität: **04.11.83 DE 3339874**

(43) Veröffentlichungstag der Anmeldung:
**19.06.85 Patentblatt 85/25**

(45) Bekanntmachung des Hinweises auf die Patenterteilung:
**15.10.86 Patentblatt 86/42**

(84) Benannte Vertragsstaaten:
**AT BE DE FR GB IT NL SE**

(56) Entgegenhaltungen:
**DE-B-1 266 573**
**FR-A-1 373 259**
**GB-A-1 181 900**
**US-A-2 496 839**
**US-A-2 559 857**
**US-A-3 545 797**

(73) Patentinhaber: **TRW Ehrenreich GmbH & Co. KG, Hansa- Allee 190, D-4000 Düsseldorf 11 (DE)**

(72) Erfinder: **Broszat, Lothar, Sperberstrasse 21, D-4019 Monheim (DE)**
Erfinder: **Schnitzler, Franz- Dieter, Mettmanner Strasse 117, D-4010 Hilden (DE)**
Erfinder: **Dickopp, Werner, Allgäuer Strasse 93, D-4100 Duisburg 28 (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist die Befestigung eines Dichtungsbalges am Gelenkgehäuse eines Kugelgelenkes, bei welcher der Dichtungsbalg mit einem wulstförmigen Rand in eine in axialer Richtung offene, im Querschnitt Uförmig ausgebildete, umlaufende Ringnut am äußeren Rand der Gehäuseöffnung eingreift, wobei die Ringnut durch eine umlaufende, im Querschnitt L-förmige Ausnehmung am Gehäuserand einerseits und durch einen in die Ausnehmung eingesetzten und in dieser befestigten, im Querschnitt entgegengesetzt zur Ausnehmung L-förmigen Haltering andererseits gebildet ist und wobei ferner die zylindrische Außenwand des Halteringes zur Fassung des Balgwulstes radial nach innen umgebogen ist.

Aus der DE-B-12 66 573 ist eine Befestigung eines Dichtungsbalges am Gehäuse von allseitig beweglichen Kugelgelenken bekannt, bei welcher der Dichtungsbalg mit einem Rand in eine in axialer Richtung offene Nut des Gelenkgehäuses eingreift, deren Außenwand gegen den Dichtungsbalg eingerollt werden kann. Dabei soll die umlaufende Nut bei der Herstellung des Gelenkgehäuses eingeformt und nicht bearbeitet werden. In der Praxis hat sich aber gezeigt, daß dss Einrollen der freistehenden Seitenwand der Nut gegen den Rand des Dichtungsbalges äußerst diffizil ist, wenn eine Zerstörung des Dichtungsbalges vermieden werden soll.

Aus der US-A- 24 96 839 ist eine Befestigung eines Dichtungsbalges am Gelenkgehäuse eines Kugelgelenkes bekannt, bei welcher die umlaufende Nut am Rand der Gehäuseöffnung durch eine umlaufende, im Querschnitt L-förmige Ausnehmung am Gehäuserand einerseits und durch einen in die Ausnehmung eingesetzten und in dieser befestigten, im Querschnitt entgegengesetzt zur Ausnehmung L-förmigen Haltering andererseits gebildet ist. Der Haltering kann beispielsweise durch Schweißen am Gelenkgehäuse befestigt sein.

Davon ausgehend liegt der Erfindung die Aufgabe zugrunde, die bekannte Befestigung eines Dichtungsbalges am Gelenkgehäuse eines Kugelgelenkes mit einem umgebördelten Haltering zu vereinfachen.

Zur Lösung dieser Aufgabe wird vorgeschlagen, in dem ebenen Boden der Ausnehmung am Gelenkgehäuse eine radial nach innen liegende, umlaufende Ringstufe vorzusehen und die Befestigung des mit seinem Ringflansch bis zu dieser Ringstufe hin an dem Boden der Ausnehmung anliegenden Halteringes mittels eines umlaufenden oder mehrerer segmentartig aus der Ringstufe herausgestammter Vorsprünge vorzunehmen.

Bei einer nach dieser technischen Lehre hergestellten Befestigung ist es ebenfalls nicht erforderlich, die am freien Ende des Gelenkgehäuses angeordnete Ausnehmung spanabhebend zu bearbeiten. Das Verstemmen der Ringstufe gegen den Haltering ist sehr einfach und kann in einen einzigen Arbeitsgang erfolgen. Danach bildet der Haltering zusammen mit der Seltenwand der Ausnehmung eine im Querschnitt Uförmig ausgebildete, umlaufende Ringnut für die Aufnahme des Dichtungsbalges. Da der Haltering aus einem verhältnismäßig weichen Blech hergestellt werden kann und einen nach außen umgebördelten Rand besitzt, besteht die Gefahr einer Beschädigung des Dichtungsbalges beim Umbördeln des Halteringes nicht.

Nachfolgend wird ein Ausführungsbeispiel dieser Befestigung anhand der zugehörigen Zeichnungen beschrieben. In den Zeichnungen zeigen:

Fig. 1 ein Kugelgelenk teilweise geschnitten in Seitenansicht;

Fig. 2 das untere Ende des Gelenkgehäuses mit einem lose aufgesetzten (linke Hälfte) und festgestemmten (rechte Hälfte) Haltering in Seitenansicht;

Fig. 3 das Gelenkgehäuse mit dem lose angesetzten (linke Hälfte) und verstemmten (rechte Hälfte) Haltering in Ansicht von unten;

Fig. 4 das untere Ende des Gelenkgehäuses mit einem lose angelegten (rechte Hälfte) und eingebördelten (linke Hälfte) Dichtungsbalg in Seitenansicht.

Das dargestellte Kugelgelenk besteht aus einem Gelenkgehäuse 1 mit einem darin angeordneten Kugelzapfen 2 und einem Dichtungsbalg 3, der mit seinen Enden sowohl am Gelenkgehäuse als auch am Kugelzapfen 2 festgelegt ist.

Der untere Rand des Gelenkgehäuses 1 besitzt eine umlaufende Ausnehmung 4 mit einer Ringstufe 5, die von einem Haltering 6 umgeben ist. Die Ringstufe 5 kann auf ihrem gesamten Umfang verstemmt werden, so daß segmentförmige Vorsprünge 7 den Haltering 6 am Gelenkgehäuse 1 fixieren.

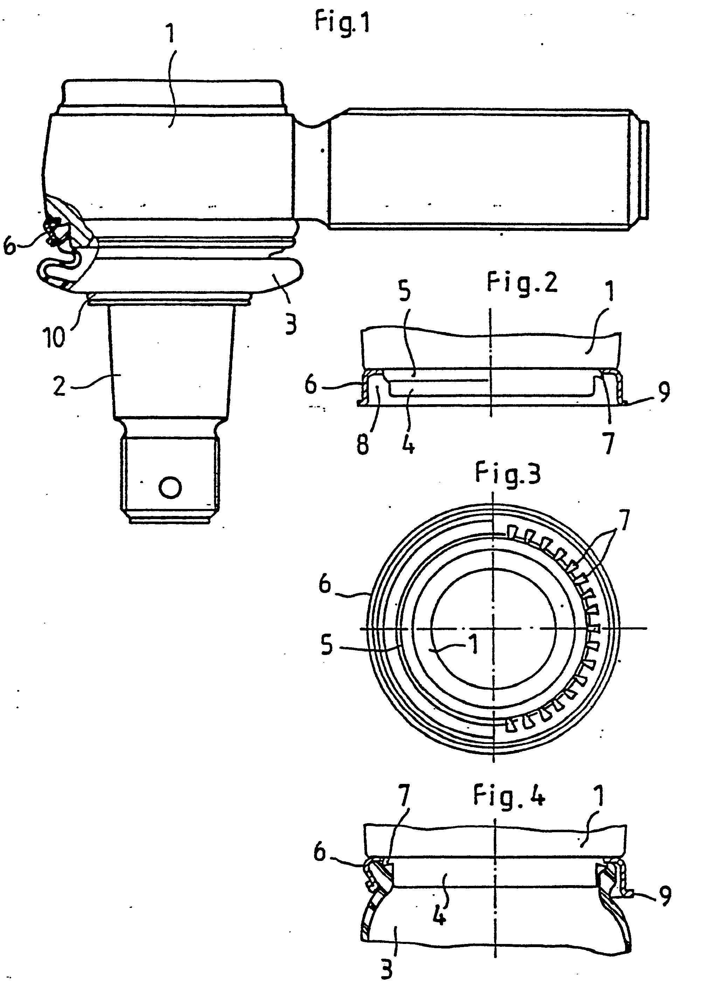

Der Dichtungsbalg 3 greift mit seinem gehäuseseitigen Rand in eine von der Ausnehmung 4 des Gelenkgehäuses 1 und dem Haltering 6 gebildete Ringnut 8 ein und kann in dieser durch Umbördeln des Halteringes 6 befestigt werden wie es in Fig. 4 (linke Halfte) dargestellt worden ist.

Damit der Haltering 6 beim Umbördeln nicht den Dichtungsbalg 3 beschädigen kann, besitzt er an seinem freien Ende einen nach außen abgewinkelten Rand 9, der dem Dichtungsbalg 3 nach dem Umbördeln des Halteringes 6 mit einem Radius anliegt.

Die Befestigung des Dichtungsbalges 3 am Kugelzapfen 2 besteht aus einem Spannring 10.

## Patentansprüche

1. Befestigung eines Dichtungsbalges (3) am Gelenkgehäuse (1) eines Kugelgelenkes, bei welcher der Dichtungsbalg (3) mit einem wulstförmigen Rand in eine in axialer Richtung offene, im Querschnitt U-förmig ausgebildete, umlaufende Ringnut (8) am äußeren Rand der Gehäuseöffnung eingreift, wobei die Ringnut (8) durch eine umlaufende, im Querschnitt L-förmige Ausnehmung (4) am Gehäuserand einerseits und durch einen in die Ausnehmung (4) eingesetzten und in dieser befestigten, im Querschnitt entgegengesetzt zur Ausnehmung (4) L-förmigen Haltering (6) andererseits gebildet ist und wobei die zylindrische Außenwand des Halteringes (6) zur Fassung des Balgwulstes radial nach innen umgebogen ist,

dadurch gekennzeichnet,

daß der ebene Boden der Ausnehmung (4) eine radial innen liegende, umlaufende Ringstufe (5) aufweist und daß die Befestigung des mit seinem Ringflansch bis zur Ringstufe (5) hin an dem Boden der Ausnehmung (4) anliegenden Halteringes (6) mittels eines umlaufenden oder mehrerer segmentartig aus der Ringstufe (5) herausgestemmter Vorsprünge (7) erfolgt.

2. Befestigung nach Anspruch 1, dadurch gekennzeichnet, daß die zylindrische, am Wulst des Dichtungsbalgs (3) anliegende Umfangsfläche des Halteringes (6) an ihrem Außenrand nach außen umgebördelt ist.

## Claims

1. Means for securing a gaiter seal (3) to the joint housing (1) of a ball joint, in which the gaiter seal (3) engages by means of a beaded edge in a circumferential annular groove (8) at the outer edge of the housing opening, which groove is open in the axial direction and is made with a U-shaped cross-section, wherein the annular groove (8) is formed on the one side by a circumferential recess (4) of L-shape crosssection at the housing edge, and on the other side by an L-shape keep ring of complementary crosssection to the recess (4), inserted in the recess (4) and secured to the recess, the cylindrical outer wall of the keep ring (6) being bent back radially inwardly to the rim of the beaded edge of the gaiter,

characterised in that,

the planebase of the recess (4) has a radially inwardly disposed circumferential annular step (5), and in that the securing of the keep ring arranged with its annular flange adjacent to the annular step (5) at the base of the recess (4) is enabled by a circumferential or multi-segmented castellated projection (7) from the annular step (5).

2. Securing means according to claim 1, characterised in that the cylindrical peripheral surface of the keep ring (6) disposed at the beaded part of the gaiter seal (3) is outwardly flanged at its outer edge.

## Revendications

1°) Fixation d'un soufflet d'étanchéité (3) sur le boîtier (1) d'un joint à rotule, dans laquelle le soufflet d'étanchéité (3) s'engage par un bord en forme de bourrelet dans une gorge annulaire (8) ouverte en direction axiale, à section droite en forme de U et entourant le bord extérieur de l'ouverture du boîtier, la gorge annulaire (8) étant formée, d'une part, par un creux (4) à section en L entourant le bord du boîtier et, d'autre part, par une bague d'arrêt (6) introduite dans le creux (4) et fixée dans celui-ci, avec une section en L opposée à celle du creux (4), la paroi extérieure cylindrique de la bague d'arrêt (6) étant recourbée vers l'intérieur en direction radiale pour saisir le bourrelet du soufflet, caractérisée en ce que le fond plat du creux (4) présente un épaulement annulaire périphérique (5) s'étendant radialement à l'intérieur et en ce que la fixation de la bague d'arrêt (6), dont le flasque annulaire est appliqué sur le fond du creux (4) jusqu'à l'épaulement annulaire (5), est effectuée au moyen d'une saillie périphérique ou de plusieurs saillies (7) dégagées par segments dans l'épaulement annulaire (5) et matées.

2°) Fixation selon la revendication 1, caractérisée en ce que la surface latérale cylindrique de la bague d'arrêt (6), s'appliquant sur le bord torique du soufflet d'étanchéité (3), est repliée vers l'extérieur suivant son bord extérieur.

Fig.1

Fig.2

Fig.3

Fig.4